# EUROPEAN PATENT APPLICATION

(11) **EP 4 644 497 A1**
(43) Date of publication of application: **05.11.2025**
(21) Application number: 23911943.1
(22) Date of filing: 21.12.2023
(51) Int. Cl.: C09D 163/00, B05D 3/02, B05D 7/24, C09D 5/08, C09D 7/63

(54) **ANTICORROSIVE COATING COMPOSITION, ANTICORROSIVE COATING FILM AND METHOD FOR PRODUCING ANTICORROSIVE COATING FILM**

(30) Priority: 28.12.2022 JP 2022212119
(71) Applicant: Chugoku Marine Paints, Ltd., Hiroshima 739-0652 (JP)
(72) Inventor: NAKAMURA Shuya, Otake-shi, Hiroshima 739-0652 (JP); YANO Shohei, Otake-shi, Hiroshima 739-0652 (JP); NAKAI Kengo, Otake-shi, Hiroshima 739-0652 (JP); SHIMIZU Takayuki, Otake-shi, Hiroshima 739-0652 (JP); OKADA Masamitsu, Otake-shi, Hiroshima 739-0652 (JP)
(74) Representative: Hoffmann Eitle
(86) International application number: PCT/JP2023/045978
(87) International publication number: WO 2024/143163

(57) **Abstract**

An embodiment of the present invention relates to an anticorrosive coating composition, an anticorrosive coating film, or a method for producing an anticorrosive coating film, and the anticorrosive coating composition contains an epoxy compound (A), an amine curing agent (B), and an alkylamine (C).

## Description

### Technical Field

An embodiment of the present invention relates to an anticorrosive coating composition, an anticorrosive coating film, or a method for producing an anticorrosive coating film.

### Background Art

An epoxy resin-based anticorrosive coating composition is applied to an inner surface of a tank such as a water ballast tank (WBT), a cargo oil tank (COT), or a chemical tank of a ship for the purpose of obtaining a tank having excellent oil resistance, solvent resistance, chemical resistance, and anticorrosion property.

As such an anticorrosive coating composition, in recent years, volatile organic compound (VOC) regulations have become strict particularly in foreign countries, and a higher-solid type anticorrosive coating composition is required.

In addition, an anticorrosive coating composition having good film formability at a low temperature (hereinafter also referred to as "low-temperature film formability") is excellent in terms of coating workability due to the property of coating application to the inner surface of a tank as well as the properties such as oil resistance, solvent resistance, chemical resistance, and an anticorrosion property, and thus an anticorrosive coating composition having such excellent low-temperature film formability is desired.

As the anticorrosive coating composition as described above, for example, anticorrosive coating compositions described in Patent Literatures 1 and 2 are known.

### Citation List

### Patent Literature

Patent Literature 1: WO 2019/022218 A
Patent Literature 2: JP 2022-40066 A

### Summary of Invention

The conventional anticorrosive coating compositions described in, for example, Patent Literatures 1 and 2 have an excellent balance between performances such as oil resistance, solvent resistance, chemical resistance, and an anticorrosion property and low-temperature film formability, but in a case where an anticorrosive coating film is formed at a lower temperature (example: 10°C or lower) and properties such as high oil resistance, solvent resistance, chemical resistance, and anticorrosion property are required, when an anticorrosive coating film is formed using the conventional anticorrosive coating composition, wrinkles are likely to occur in the formed coating film, and there is room for improvement in terms of low-temperature film formability. That is, it has been found that the conventional anticorrosive coating composition is not easy to achieve both high oil resistance, solvent resistance, chemical resistance, and anticorrosion property and excellent low-temperature film formability.

An embodiment of the present invention provides an anticorrosive coating composition capable of forming an anticorrosive coating film having high oil resistance, solvent resistance, chemical resistance, and anticorrosion property while having excellent low-temperature film formability.

### Solution to Problem

A configuration example of the present invention is as follows.
[1] An anticorrosive coating composition, containing an epoxy compound (A), an amine curing agent (B), and an alkylamine (C).
[2] The anticorrosive coating composition according to [1], wherein the alkylamine (C) is liquid at ambient temperature.
[3] The anticorrosive coating composition according to [1] or [2], wherein the alkylamine (C) is a primary amine represented by R-NH₂ [R is an alkyl group having 1 to 20 carbon atoms].
[4] The anticorrosive coating composition according to any one of [1] to [3], wherein the amine curing agent (B) contains an amine curing agent having a cyclic structure.
[5] The anticorrosive coating composition according to any one of [1] to [4], wherein the epoxy compound (A) has an epoxy equivalent of 200 or less and is liquid at ambient temperature.
[6] The anticorrosive coating composition according to any one of [1] to [5], wherein the amine curing agent (B) is liquid at ambient temperature.
[7] The anticorrosive coating composition according to any one of [1] to [6], wherein a nonvolatile component content is 90 mass% or more.
[8] An anticorrosive coating film formed from the anticorrosive coating composition according to any one of [1] to [7].
[9] A method for producing an anticorrosive coating film, including a step of drying the anticorrosive coating composition according to any one of [1] to [7] at a temperature of 10°C or lower to form an anticorrosive coating film.

### Advantageous Effects of Invention

According to an embodiment of the present invention, it is possible to provide an anticorrosive coating composition capable of forming an anticorrosive coating film having high oil resistance, solvent resistance, chemical resistance, and anticorrosion property while having excellent low-temperature film formability.

According to an embodiment of the present invention, it is possible to form an anticorrosive coating film having the above-mentioned excellent various properties, and thus it is possible to suitably use it for coating application to various substrates, particularly the inner surface of a tank used for transporting or storing, for example, a chemical substance.

In addition, according to an embodiment of the present invention, it is possible to obtain a coating composition having excellent coating workability, particularly spray coating workability while being of a high-solid type. Therefore, an anticorrosive coating film can be easily formed even on a large-area substrate with little effect on the environment and human body.

Here, the wording "having excellent oil resistance, solvent resistance, and chemical resistance" specifically means having excellent resistance to, oils such as heavy oils, gasoline, naphtha, and palm oil, solvents such as methanol, ethanol, xylene, benzene, methyl isobutyl ketone, 1,2-dichloroethane, and ethyl acetate, and chemicals such as sodium hydroxide and sulfuric acid.

Since these oils, solvents, and chemicals significantly affect coating films, it is considered that a coating film having resistance to these oils, solvents, and chemicals is resistant to common oils, solvents, and chemicals.

### Brief Description of the Drawings

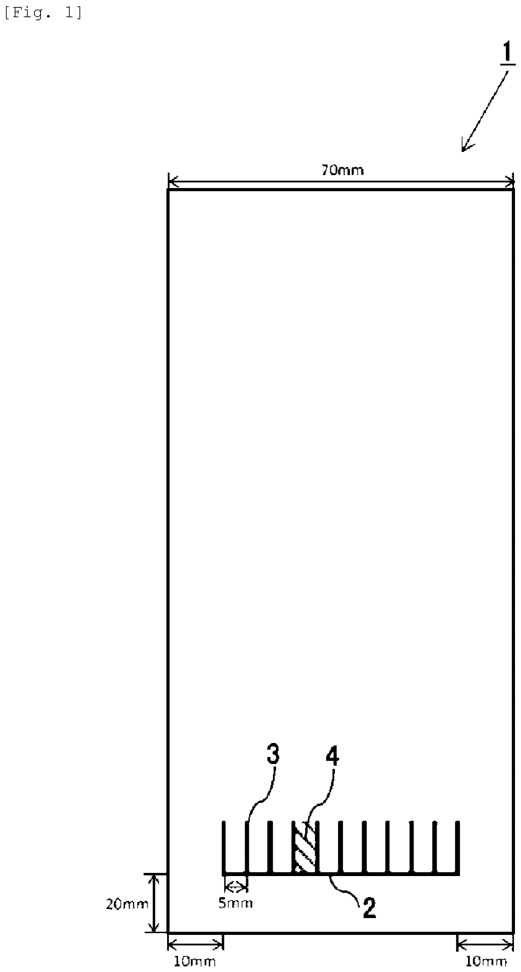

Fig. 1 is a schematic view of a notched test plate used for an anticorrosion property test in examples.

### Description of Embodiments

### <<Anticorrosive coating composition>>

An anticorrosive coating composition according to an embodiment of the present invention (hereinafter also referred to as "present composition") contains an epoxy compound (A), an amine curing agent (B), and an alkylamine (C).

The nonvolatile component content in the present composition is preferably 90 mass% or more, more preferably 92 mass% or more, and still more preferably 95 mass% or more.

It can be said that the present composition in which the nonvolatile component content is in the above range is a higher solid anticorrosive coating composition than before.

The nonvolatile component content in the present composition is a value of a mass percentage calculated by weighing 1 g of the present composition (example: a composition obtained immediately after a base component and a curing agent component are mixed) in a flat bottom dish, uniformly spreading the composition using a wire with a known mass, leaving the composition at 23°C for 24 hours, drying the composition at 110°C for 1 hour, and then weighing the heating residue (also referred to as "nonvolatile component") and the mass of the wire.

In the present description, with respect to each of a raw material (example: the epoxy compound (A)) constituting a base component or a curing agent component, the base component, and the curing agent component, a component other than the organic solvent and the dispersion medium contained in each of these components is referred to as a "solid content".

The present composition preferably contains almost no VOC such as an organic solvent, and specifically, the VOC content in the present composition when adjusted to a viscosity suitable for coating application is preferably 200 g/L or less, more preferably 150 g/L or less, and still more preferably 100 g/L or less.

In the present invention, the "organic solvent" refers to an organic compound having a boiling point at 1 atm of lower than 200°C.

The VOC content of the present composition can be calculated from the following formula (1) using the following coating material specific gravity (g/cm³) and the value of the nonvolatile component content (mass%) in the present composition. VOC content (g/L) = Coating material specific gravity × 1000 × (100 - Nonvolatile component content in the present composition) /100 (1)

Coating material specific gravity (g/cm³): a value calculated by filling a specific gravity cup having an internal volume of 100 ml with the present composition (example: a composition obtained immediately after a base component and a curing agent component are mixed) under a temperature condition of 23°C, and then measuring the mass of the composition

The present composition may be a one-component type composition, but is usually a two-component type composition including a base component containing an epoxy compound (A) and a curing agent component containing an amine curing agent (B) and an alkylamine (C). If necessary, the present composition may also be a three or more-component type composition.

The base component and the curing agent component are usually, for example, preserved, stored, and transported in separate containers, and then used by being mixed together immediately before use.

### <Epoxy compound (A)>

Examples of the epoxy compound (A) include a polymer or an oligomer containing two or more epoxy groups, and a polymer or an oligomer produced by a ring-opening reaction of the epoxy groups.

As the epoxy compound (A), one type may be used or two or more types may be used.

The epoxy equivalent of the epoxy compound (A) is preferably 200 or less, more preferably 100 to 200, and still more preferably 100 to 190 because it is possible to form an anticorrosive coating film having, for example, excellent oil resistance, solvent resistance, chemical resistance, and anticorrosion property. The epoxy equivalent is calculated based on JIS K 7236:2001.

The epoxy compound having an epoxy equivalent of more than 200 tends to have an excessively large molecular weight, and therefore when such an epoxy compound is used, an organic solvent is often required in order to adjust the viscosity to a level appropriate for coating application, and a high-solid type anticorrosive coating composition sometimes cannot be easily obtained.

The epoxy compound (A) is preferably an epoxy compound that is liquid at ambient temperature, and specific examples thereof include a bisphenol A-type epoxy resin, a bisphenol F-type epoxy resin, and a bisphenol AD-type epoxy resin.

The "ambient temperature" in the present description means 25°C.

As the epoxy compound (A), a commercially available product may be used, and examples of the commercially available product include "E-028" (manufactured by OHTAKE-MEISHIN CHEMICAL, CO., LTD., epoxy equivalent: 180 to 190, solid content: 100%) which is a bisphenol A-type epoxy resin and "jER 807" (manufactured by Mitsubishi Chemical Corporation, epoxy equivalent: 160 to 175, solid content: 100%) which is a bisphenol F-type epoxy resin.

The viscosity of the epoxy compound (A) at 25°C as measured with an E-type viscometer (FMD type, manufactured by TOKIMEC INC.) is preferably 1,500 mPa·s or more, more preferably 3,000 mPa·s or more, and preferably 120,000 mPa·s or less and more preferably 30,000 mPa·s or less.

The content of the epoxy compound (A) in the present composition is preferably 10 mass% or more, more preferably 15 mass% or more, and preferably 50 mass% or less, and more preferably 45 mass% or less with respect to 100 mass% of the nonvolatile component of the present composition from the viewpoint that, for example, an anticorrosive coating film having, for example, excellent adhesion to a substrate, oil resistance, solvent resistance, chemical resistance, and anticorrosion property can be easily formed.

### <Amine curing agent (B)>

The amine curing agent (B) is not particularly limited, but is preferably liquid at ambient temperature from the viewpoint that, for example, the present composition of a high-solid type can be easily obtained. The amine curing agent (B) is a compound different from the alkylamine (C), and is preferably a polyamine having two or more primary or secondary amino groups in one molecule.

Specifically, the amine curing agent (B) is preferably an amine compound such as an aliphatic, alicyclic, aromatic, or heterocyclic amine compound. Note that these amine compounds are distinguished by the type of carbon to which an amino group is bonded, and for example, an aliphatic amine curing agent refers to a compound having at least one amino group bonded to aliphatic carbon.

As the amine curing agent (B), one type may be used or two or more types may be used.

The condition that the amine curing agent (B) is "liquid at ambient temperature" means that the viscosity measured with an E-type viscometer at 25°C is 1,000 Pa·s or less.

Use of such an amine curing agent (B) can reduce the organic solvent for adjusting the viscosity to a level appropriate for coating application, so that the present composition having excellent coating workability while being of a high-solid type can be easily obtained.

Examples of the aliphatic amine curing agent include an alkylene polyamine, a polyalkylene polyamine, and an alkylaminoalkylamine.

Examples of the alkylene polyamine include a compound represented by a formula: "H₂N-R¹-NH₂" (R¹ is a divalent hydrocarbon group having 1 to 12 carbon atoms), and specific examples thereof include methylenediamine, ethylenediamine, 1,2-diaminopropane, 1,3-diaminopropane, 1,5-diaminopentane, 1,6-diaminohexane, and trimethylhexamethylenediamine.

Examples of the polyalkylene polyamine include a compound represented by a formula: "H₂N- (CₘH₂ₘNH)ₙH" (m is an integer of 1 to 10, and n is an integer of 2 to 10, preferably an integer of 2 to 6), and specific examples thereof include diethylenetriamine (DETA), dipropylenetriamine, triethylenetetramine (TETA), tripropylenetetramine, tetraethylenepentamine (TEPA), tetrapropylenepentamine, pentaethylenehexamine, nonaethylenedecamine, and triethylene-bis(trimethylene)hexamine.

Examples of the alkylaminoalkylamine include a compound represented by a formula: "R²₂N-(CH₂)ₚ-NH₂" (R²' s are independently a hydrogen atom or an alkyl group having 1 to 8 carbon atoms (however, at least one R² is an alkyl group having 1 to 8 carbon atoms), and p is an integer of 1 to 6), and specific examples thereof include dimethylaminoethylamine, diethylaminoethylamine, dibutylaminoethylamine, dimethylaminopropylamine, diethylaminopropylamine, dipropylaminopropylamine, dibutylaminopropylamine, and dimethylaminobutylamine.

Examples of the aliphatic amine curing agent other than these include tetra(aminomethyl)methane, tetrakis(2-aminoethylaminomethyl)methane, 1,3-bis(2'-aminoethylamino)propane, tris(2-aminoethyl)amine, bis(cyanoethyl)diethylenetriamine, polyoxyalkylene polyamine (in particular diethylene glycol bis(3-aminopropyl)ether), bis(aminomethyl)cyclohexane, isophoronediamine (IPDA), menthanediamine (MDA), o-xylylenediamine, m-xylylenediamine (MXDA), p-xylylenediamine, bis(aminomethyl)naphthalene, bis(aminoethyl)naphthalene, 1,4-bis(3-aminopropyl)piperazine, 1-(2'-aminoethylpiperazine), and 1-[2'-(2''-aminoethylamino)ethyl]piperazine.

It is preferable not to use bis(aminomethyl)cyclohexane and a modified product thereof from the viewpoint that, for example, an anticorrosive coating film having excellent film formability can be easily formed.

Specific examples of the alicyclic amine curing agent include cyclohexanediamine, diaminodicyclohexylmethane (in particular, 4,4'-methylenebis(cyclohexylamine) [PACM]), 4,4'-isopropylidenebiscyclohexylamine, norbornanediamine (NBDA), and 2,4-di(4-aminocyclohexylmethyl)aniline.

Examples of the aromatic amine curing agent include an aromatic polyamine compound having two or more primary amino groups bonded to an aromatic ring such as a benzene ring or a naphthalene ring.

Specific examples of this aromatic amine curing agent include phenylenediamine, naphthalenediamine, diaminodiphenylmethane, 2,2-bis(4-aminophenyl)propane, 4,4'-diaminodiphenyl ether, 4,4'-diaminobenzophenone, 4,4'-diaminodiphenylsulfone, 3,3'-dimethyl-4,4'-diaminodiphenylmethane, diaminodiethylphenylmethane, 2,4'-diaminobiphenyl, 2,3'-dimethyl-4,4'-diaminobiphenyl, and 3,3'-dimethoxy-4,4'-diaminobiphenyl.

Specific examples of the heterocyclic amine curing agent include 1,4-diazacycloheptane, 1,11-diazacycloeicosane, and 1,15-diazacyclooctacosane.

Examples of the amine curing agent (B) further include a modified product of the amine curing agent described above, such as a fatty acid modified product such as polyamidoamine, an amine adduct with an epoxy compound, a Mannich modified product (example: phenalkamine, phenalkamide), a Michael adduct, ketimine, and aldimine.

As the amine curing agent (B), it is preferable to contain an amine curing agent having a cyclic structure, and more preferable to contain at least one type selected from methylene-crosslinked poly(cyclohexyl-aromatic)amine (MPCA), 4,4'-methylenebis(cyclohexylamine) (PACM), and a Mannich-modified product of meta-xylylenediamine (MXDA) from the viewpoint that, for example, an anticorrosive coating film having more excellent oil resistance, solvent resistance, chemical resistance, and anticorrosion property can be easily formed. It is particularly preferable to contain MPCA from the viewpoint that, for example, an anticorrosive coating film having higher oil resistance can be easily formed.

As described above, it was found that although it is preferable to use at least one type selected from MPCA, PACM, and a Mannich modified product of MXDA from the viewpoint that, for example, an anticorrosive coating film having more excellent oil resistance, solvent resistance, chemical resistance, and anticorrosion property can be easily formed, and when an anticorrosive coating film is formed at a low temperature (example: 10°C or lower) using a conventional anticorrosive coating composition of a high-solid type (solvent-free type) in which such an amine curing agent is used, wrinkles are particularly likely to occur in the formed anticorrosive coating film, and there is room for improvement in terms of low-temperature film formability. This is presumed to be because in the applied anticorrosive coating composition, a low molecular weight amine compound contained in an amine curing agent such as MPCA, PACM, or a Mannich modified product of MXDA appears on the surface of the coating film, whereby the low molecular weight amine compound is unevenly distributed on the surface of the coating film, and wrinkles (poor film formability) occur by subsequent drying and curing (curing shrinkage) at a low temperature.

It was also found that when benzyl alcohol-free MPCA or PACM is used, wrinkles (poor film formability) are likely to occur. This is considered to be because benzyl alcohol-free MPCA and PACM have a large content of the low molecular weight amine compound.

On the other hand, according to the present composition, for the purpose of easily forming an anticorrosive coating film having more excellent oil resistance, solvent resistance, chemical resistance, and anticorrosion property, even when at least one type selected from MPCA, PACM, and a Mannich modified product of MXDA is used, and even when such an amine curing agent free of benzyl alcohol is used, wrinkles (poor film formability) are less likely to occur due to drying and curing (curing shrinkage) at a low temperature.

In addition, as the amine curing agent (B), from the viewpoint that, for example, an anticorrosive coating film having excellent flexibility and anticorrosion property and excellent topcoat coating application compatibility (example: excellent adhesion to a topcoat coating film that can be formed on an anticorrosive coating film formed from the present composition) can be easily formed, and there is a tendency that the pot life of the present composition can be extended, it is preferable to use an aliphatic amine curing agent (but it does not have a cyclic structure, example: "Ancamine 2738", "Ancamide 506", both manufactured by Evonik Japan Co., Ltd.), and it is more preferable to use the aliphatic amine curing agent (but it does not have a cyclic structure) and at least one type selected from MPCA, PACM, and a Mannich-modified product of MXDA in combination from the viewpoint that, for example, an anticorrosive coating film having an excellent balance among flexibility, oil resistance, solvent resistance, chemical resistance, an anticorrosion property, and topcoat coating application compatibility can be easily formed, and the pot life of the present composition can be extended.

The methylene-crosslinked poly(cyclohexyl-aromatic)amine (MPCA) is described, for example, in U.S. Patent No. 5,280,091, and specific examples thereof include a polyfunctional polyamine produced by hydrogenating an oligomer obtained by condensation of aniline and formaldehyde.

Specific examples of the Mannich-modified product of MXDA include a Mannich-modified amine obtained by Mannich condensation of one type or two or more types of phenols, one type or two or more types of aldehydes, and m-xylylenediamine.

The amine curing agent (B) may be obtained by a conventionally known method, or a commercially available product may be used. When a commercially available product is used, it is preferable to use a benzyl alcohol-free liquid amine curing agent from the viewpoint that, for example, effects of the present invention are further exhibited.

Examples of the commercially available product of the benzyl alcohol-free liquid amine curing agent include "Ancamine 2738", "Ancamine 2264", "Ancamine 2167", "Ancamine 2422", "Ancamine 2089K", and "Ancamide 506" (the above products are manufactured by Evonik Japan Co., Ltd.), and "NX-5567" (manufactured by Cardolite Japan).

When the present composition is a two-component type composition containing a base component and a curing agent component, the amine curing agent (B) is contained in the curing agent component. The viscosity of this curing agent component at 25°C as measured with an E-type viscometer is preferably 100,000 mPa·s or less, more preferably 10,000 mPa·s or less, and more preferably 50 mPa·s or more from the viewpoint of, for example, providing a composition having more excellent handleability and coating workability.

From the viewpoint that, for example, an anticorrosive coating film having a more excellent anticorrosion property can be easily formed, the active hydrogen equivalent of the amine curing agent (B) is preferably 20 or more, more preferably 40 or more, and preferably 1000 or less, and more preferably 500 or less.

The content of the amine curing agent (B) in the present composition is preferably 5 mass% or more, more preferably 7 mass% or more, and preferably 20 mass% or less, and more preferably 15 mass% or less with respect to 100 mass% of the nonvolatile component of the present composition from the viewpoint that, for example, an anticorrosive coating film having, for example, excellent oil resistance, solvent resistance, chemical resistance, and anticorrosion property can be easily formed.

When the present composition contains at least one type selected from MPCA, PACM, and a Mannich-modified product of MXDA, the content of the MPCA, the PACM, and the Mannich-modified product of MXDA is preferably 0.5 mass% or more, more preferably 1 mass% or more, and preferably 15 mass% or less, and more preferably 10 mass% or less with respect to 100 mass% of the nonvolatile component of the present composition from the viewpoint that, for example, an anticorrosive coating film having, for example, excellent oil resistance, solvent resistance, chemical resistance, and anticorrosion property can be easily formed.

When the present composition contains an aliphatic amine curing agent (but it does not have a cyclic structure), the content of the aliphatic amine curing agent (but it does not have a cyclic structure) is preferably 1 mass% or more, more preferably 2 mass% or more, and preferably 15 mass% or less, and more preferably 12 mass% or less with respect to 100 mass% of the nonvolatile component of the present composition from the viewpoint that, for example, an anticorrosive coating film having excellent flexibility, anticorrosion property, and topcoat coating application compatibility can be easily formed, and the pot life of the present composition can be extended.

From the viewpoint that, for example, an anticorrosive coating film having excellent anticorrosion property, coating film strength, and drying property can be easily formed, it is desirable to use the amine curing agent (B) in an amount such that the reaction ratio calculated by the following formula (2) is preferably 0.3 or more, more preferably 0.4 or more, and preferably 1.2 or less, and more preferably 1.1 or less. Reaction ratio = {(Blending amount of amine curing agent (B)/Active hydrogen equivalent of amine curing agent (B)) + (Blending amount of component reactive with epoxy compound (A)/Functional group equivalent of component reactive with epoxy compound (A))}/{ (Blending amount of epoxy compound (A)/Epoxy equivalent of epoxy compound (A)) + (Blending amount of component reactive with amine curing agent (B)/Functional group equivalent of component reactive with amine curing agent (B))} (2)

Here, examples of the "component reactive with amine curing agent (B)" in the formula (2) include components reactive with the amine curing agent (B) in the following other components, and examples of the "component reactive with epoxy compound (A)" include the alkylamine (C) and components reactive with the epoxy compound (A) in the following other components. The "functional group equivalent" of each component means a mass (g) per 1 mole of functional group obtained by dividing the mass of 1 mole of each component by the number of moles of functional group contained therein.

### <Alkylamine (C)>

The alkylamine (C) is preferably a primary alkylamine and preferably a primary alkylmonoamine from the viewpoint that, for example, the present composition having excellent low-temperature film formability can be easily obtained even when at least one type selected from MPCA, PACM, and a Mannich modified product of MXDA is used.

The alkylamine (C) is preferably liquid at ambient temperature from the viewpoint that, for example, the present composition of a high-solid type can be easily obtained.

As the alkylamine (C), one type may be used or two or more types may be used.

Specific examples of the alkylamine (C) include primary alkylamines such as butylamine, octylamine, dodecyl amine, hexadecyl amine, octadecyl amine, cocoamine, tallow amine, hydrogenated tallow amine, oleyl amine, lauryl amine, and stearyl amine; secondary alkylamines such as dicocoamine, dihydrogenated tallow amine, and distearyl amine; and tertiary alkylamines such as dodecyl dimethyl amine, didodecyl monomethyl amine, tetradecyl dimethyl amine, octadecyl dimethyl amine, cocodimethyl amine, dodecyl tetradecyl dimethyl amine, and trioctylamine.

The alkylamine (C) is preferably a primary amine represented by R-NH₂ [R is an alkyl group having 1 to 20 carbon atoms] from the viewpoint that, for example, the present composition of a high-solid type having excellent low-temperature film formability can be easily obtained while an anticorrosive coating film having high oil resistance, solvent resistance, chemical resistance and anticorrosion property can be formed.

The number of carbon atoms in R is preferably 8 or more, preferably 18 or less, more preferably 12 or less, and particularly preferably 10 or less from the viewpoint that, for example, the alkylamine is likely to be liquid at ambient temperature and the present composition having more excellent low-temperature film formability can be easily obtained.

The alkyl group in R may have a branched chain or may be cyclic like a cycloalkyl group, but is preferably a chain alkyl group, and more preferably a linear alkyl group.

The alkylamine (C) is preferably a compound other than the compound represented by the following formula (3) from the viewpoint that, for example, the present composition having excellent low-temperature film formability can be easily obtained.

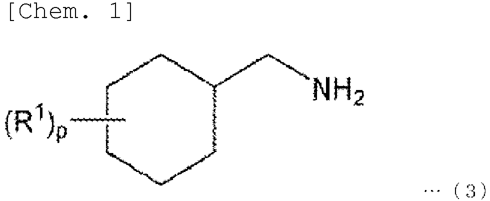

In the formula (3), R¹ represents an alkyl group having 1 to 6 carbon atoms which may have a hydroxy group, R²NHCH₂-(R² represents an alkyl group having 1 to 6 carbon atoms), or a group represented by the following formula (3A), and p is a number of 0 to 2.

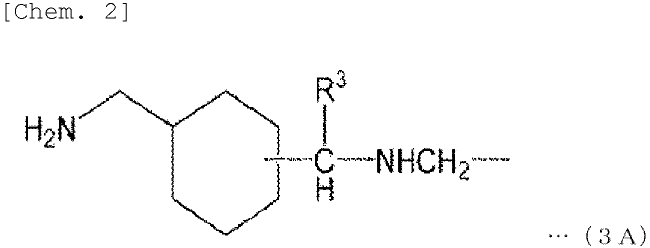

In the formula (3A), R³ represents a hydrogen atom or NH₂-.

When the present composition is a two-component type composition containing a base component and a curing agent component, the alkylamine (C) is contained in the curing agent component.

The alkylamine (C) may be obtained by a conventionally known method, or a commercially available product may be used.

Examples of the commercially available product include "FARMIN 08D" (manufactured by Kao Corporation, main component: containing 98% of a primary alkylamine having 8 carbon atoms), "FARMIN CS" (manufactured by Kao Corporation, main component: containing 51% of a primary alkylamine having 12 carbon atoms, accessory components: containing a total of 14% of primary alkylamines having 8 or 10 carbon atoms, and containing a total of 35% of primary alkylamines having 14 to 18 carbon atoms), "FARMIN 20D" (manufactured by Kao Corporation, main component: a primary alkylamine having 12 carbon atoms), "FARMIN O-V" (manufactured by Kao Corporation, main component: a primary alkylamine having 18 carbon atoms), "FARMIN DM0898" (manufactured by Kao Corporation, main component: a tertiary alkylamine having 8 carbon atoms), "FARMIN DM1098" (manufactured by Kao Corporation, main component: a tertiary alkylamine having 10 carbon atoms), "FARMIN DM2098" (manufactured by Kao Corporation, main component: a tertiary alkylamine having 12 carbon atoms), "FARMIN DM2463" (manufactured by Kao Corporation, main component: a tertiary alkylamine having 12 or 14 carbon atoms), "FARMIN DM4098" (manufactured by Kao Corporation, main component: a tertiary alkylamine having 14 carbon atoms), and "FARMIN DM6098" (manufactured by Kao Corporation, main component: a tertiary alkylamine having 16 carbon atoms).

The content of the alkylamine (C) in the present composition is preferably 0.01 mass% or more, more preferably 0.05 mass% or more, still more preferably 0.1 mass% or more, particularly preferably 0.2 mass% or more, and preferably 10 mass% or less, more preferably 6 mass% or less, and particularly preferably 4 mass% or less with respect to 100 mass% of the nonvolatile component of the present composition from the viewpoint of, for example, being excellent in balance between being able to easily obtain the present composition having excellent low-temperature film formability and being able to easily form an anticorrosive coating film having, for example, excellent oil resistance, solvent resistance, chemical resistance, and anticorrosion property.

In addition, the content of the alkylamine (C) is preferably 0.001 parts by mass or more, more preferably 0.005 parts by mass or more, still more preferably 0.01 parts by mass or more, particularly preferably 0.02 parts by mass or more, and preferably 0.4 parts by mass or less, more preferably 0.3 parts by mass or less, and particularly preferably 0.2 parts by mass or less with respect to 1 part by mass of the content of the amine curing agent (B) from the viewpoint of, for example, being excellent in balance between being able to easily obtain the present composition having excellent low-temperature film formability, and being able to easily form an anticorrosive coating film having, for example, excellent oil resistance, solvent resistance, chemical resistance, and anticorrosion property.

### <Other components>

In addition to the above (A) to (C), the present composition may contain other conventionally known components used for a coating composition such as a reactive diluent, a silane coupling agent, a pigment, an anti-sagging agent (anti-settling agent), a plasticizer, a dispersant, a leveling agent, a surface adjusting agent, a dioxolane derivative, an organic solvent, an epoxy compound other than the epoxy compound (A), and/or a curing agent other than the amine curing agent (B) as long as the effect of the present invention is not impaired.

As each of these other components, one type may be used alone, or two or more types may be used, or the component may be added to the base component or to the curing agent component.

The present composition may or may not contain benzyl alcohol, but it is preferable that the present composition does not substantially contain benzyl alcohol.

Benzyl alcohol is miscible with reactive components such as the above (A) to (C), and is blended in a base component or blended in a commercially available amine curing agent in advance from the viewpoint of, for example, a diluting action or a viscosity reducing action.

On the other hand, benzyl alcohol is regarded as a chemical substance that has low volatility and is generally less harmful as compared with other organic solvents, but is classified into acute toxicity (oral): Category 4, acute toxicity (dermal): Category 4, and acute toxicity (inhalation: vapours): Category 3 according to GHS classification, and it is pointed out that benzyl alcohol is harmful to health.

Since benzyl alcohol is a high boiling point solvent, when benzyl alcohol is used in a large amount (example: 3 mass% or more in the composition), benzyl alcohol may remain in a dry coating film, and due to this effect, deterioration in coating film property, particularly anticorrosion property and oil resistance may be caused.

Therefore, from the viewpoint of, for example, the effect on the environment and human body, and good coating film property, the present composition free of benzyl alcohol is required. However, as described above, when it is intended to form an anticorrosive coating film having particularly high oil resistance, solvent resistance, chemical resistance, and anticorrosion property, it has been found that it is preferable to use an amine curing agent having a cyclic structure, but in a conventional anticorrosive coating composition using such an amine curing agent having a cyclic structure, use of an amine curing agent free of benzyl alcohol is problematic particularly in terms of low-temperature film formability.

On the other hand, it has been found that the present composition has excellent low-temperature film formability even when an amine curing agent having a cyclic structure free of benzyl alcohol is used. That is, according to the present composition, an anticorrosive coating composition having excellent low-temperature film formability can be easily obtained while an anticorrosive coating film having excellent oil resistance, solvent resistance, chemical resistance, and anticorrosion property can be formed although benzyl alcohol is substantially not contained.

In the present invention, the wording "benzyl alcohol is substantially not contained" means that benzyl alcohol is not intentionally added to the present composition and that a raw material intentionally containing benzyl alcohol is not used, and specifically means that the content of benzyl alcohol in the present composition is 0.5 mass% or less.

### [Reactive diluent]

The present composition may contain a reactive diluent, and preferably contains a reactive diluent. The reactive diluent is preferably an epoxy group-containing reactive diluent.

As the reactive diluent, one type may be used or two or more types may be used.

The epoxy group-containing reactive diluent is not particularly limited as long as an epoxy compound has a viscosity of 500 mPa·s or less at 25°C as measured with an E-type viscometer (FMD type; manufactured by TOKIMEC INC.), and may be of a monofunctional type or a polyfunctional type.

Examples of the monofunctional epoxy group-containing reactive diluent include an alkyl glycidyl ether (the number of carbon atoms in the alkyl group: 1 to 13), phenyl glycidyl ether, o-cresyl glycidyl ether, an alkyl phenyl glycidyl ether (the number of carbon atoms in the alkyl group: 1 to 20, preferably 1 to 5, example: methyl phenyl glycidyl ether, ethyl phenyl glycidyl ether, propyl phenyl glycidyl ether, p-tert-butyl phenyl glycidyl ether), phenol glycidyl ether, alkylphenol glycidyl ether, phenol (EO)ₙ glycidyl ether (the number of repetitions: n = 3 to 20, EO: -C₂H₄O-).

Examples of the polyfunctional epoxy group-containing reactive diluent include 1,4-butanediol diglycidyl ether, 1,6-hexanediol diglycidyl ether, neopentyl glycol diglycidyl ether, cyclohexane dimethanol diglycidyl ether, resorcinol diglycidyl ether, mono- or poly-alkylene glycol diglycidyl ether (the number of carbon atoms in the alkylene group: 1 to 5, example: ethylene glycol diglycidyl ether, dipropylene glycol diglycidyl ether, polypropylene glycol diglycidyl ether), and trimethylolpropane triglycidyl ether.

When the present composition contains a reactive diluent, the content of the reactive diluent is preferably 10 mass% or less, more preferably 8 mass% or less, particularly preferably 6 mass% or less, and preferably 0.1 mass% or more, and more preferably 0.5 mass% or more with respect to 100 mass% of the nonvolatile component of the present composition from the viewpoint that, for example, an anticorrosive coating film having, for example, excellent oil resistance, solvent resistance, chemical resistance, and anticorrosion property can be easily formed, and it can contribute to the reduction in the viscosity and extension of the pot life of the present composition.

### [Silane coupling agent]

The present composition may contain a silane coupling agent, and preferably contains a silane coupling agent.

The silane coupling agent is not particularly limited, and a conventionally known compound can be used, but is preferably a compound having at least two functional groups in the same molecule and capable of contributing to, for example, improvement of adhesion to a substrate, and reduction in the viscosity of the present composition, and is more preferably a compound represented by, for example, a formula: "X-SiMeₙY₃₋ₙ" [n is 0 or 1, X is a reactive group capable of reacting with an organic substance (example: an amino group, a vinyl group, an epoxy group, a mercapto group, a halogen group, a group in which a hydrocarbon group is partially substituted with such a group, or a group in which a group in which a hydrocarbon group is partially substituted with, for example, an ether bond is partially substituted with such a group), Me is a methyl group, and Y is a hydrolyzable group (example: an alkoxy group such as a methoxy group or an ethoxy group)].

As the silane coupling agent, one type may be used or two or more types may be used.

As the silane coupling agent, a compound having an epoxy group and an alkoxy group is preferable, and an alkoxy group-containing silane coupling agent having one epoxy group in one molecule is more preferable from the viewpoint that, for example, an anticorrosive coating film having excellent adhesion to a substrate, and having, for example, more excellent oil resistance, solvent resistance, chemical resistance, and anticorrosion property can be easily formed.

As the silane coupling agent, a commercially available product may be used, and specific examples of the commercially available product include (3,4-epoxycyclohexyl)ethyltrimethoxysilane (for example, "KBM 303" manufactured by Shin-Etsu Chemical Co., Ltd.), 3-glycidoxypropyltrimethoxysilane (for example, "KBM 403" manufactured by Shin-Etsu Chemical Co., Ltd.), γ-glycidoxypropylmethyldimethoxysilane (for example, "AY43-026" manufactured by Dow Corning Toray Co., Ltd.), and γ-glycidoxypropylmethyldiethoxysilane (for example, "KBE 402" manufactured by Shin-Etsu Chemical Co., Ltd.).

When the present composition contains a silane coupling agent, the content of the silane coupling agent is preferably 1 mass% or more, more preferably 3 mass% or more, and preferably 25 mass% or less, and more preferably 15 mass% or less with respect to 100 mass% of the nonvolatile component of the present composition from the viewpoint that, for example, an anticorrosive coating film having more excellent adhesion to a substrate, and having more excellent solvent resistance, chemical resistance, and anticorrosion property can be easily formed, and it can contribute to the reduction in the viscosity and extension of the pot life of the present composition.

### [Pigment]

The present composition may contain a pigment, and preferably contains a pigment.

Examples of the pigment include an extender pigment, a coloring pigment, and an antirust pigment, and the pigment may be either organic or inorganic.

As the pigment, one type may be used or two or more types may be used.

Examples of the extender pigment include talc, mica, (precipitated) barium sulfate, (potash) feldspar, kaolin, alumina white, bentonite, wollastonite, clay, glass flakes, aluminum flakes, scaly iron oxide, magnesium carbonate, barium carbonate, calcium carbonate, dolomite, and silica. In particular, talc, mica, silica, (precipitated) barium sulfate, or (potash) feldspar is preferable.

Among them, mica is preferably used from the viewpoint of, for example, relaxing the internal stress of a cured coating film and improving adhesion to a substrate.

When the present composition contains an extender pigment, the content of the extender pigment is preferably 10 mass% or more, more preferably 20 mass% or more, and preferably 70 mass% or less, and more preferably 60 mass% or less with respect to 100 mass% of the nonvolatile component of the present composition.

Examples of the coloring pigment include inorganic pigments such as carbon black, titanium dioxide (titanium white), iron oxide (Bengala), yellow iron oxide, and ultramarine blue, and organic pigments such as cyanine blue and cyanine green. In particular, titanium white, carbon black, or Bengala is preferable.

When the present composition contains a coloring pigment, the content of the coloring pigment is preferably 1 to 30 mass% and more preferably 1 to 15 mass% with respect to 100 mass% of the nonvolatile component of the present composition.

Examples of the antirust pigment include zinc powder, zinc alloy powder, a zinc phosphate-based compound, a calcium phosphate-based compound, an aluminum phosphate-based compound, a magnesium phosphate-based compound, a zinc phosphite-based compound, a calcium phosphite-based compound, an aluminum phosphite-based compound, a strontium phosphite-based compound, an aluminum tripolyphosphate-based compound, a molybdate-based compound, a zinc cyanamide-based compound, a borate compound, a nitro compound, and a complex oxide.

When the present composition contains a pigment, the pigment volume concentration (PVC) in the present composition is preferably 10 to 70%, and more preferably 10 to 50%, from the viewpoint that, for example, a composition having excellent coating workability can be easily obtained, and an anticorrosive coating film having excellent adhesion to a substrate due to stress relief and water resistance can be easily formed.

The PVC refers to the total volume concentration of the pigment based on the volume of the nonvolatile component in the present composition. Specifically, the PVC can be calculated by the following formula: PVC [%] = Total volume of all pigments in the present composition × 100/Volume of nonvolatile component in the present composition.

The volume of the nonvolatile component in the present composition can be calculated from the mass and true density of the nonvolatile component of the present composition. The mass and true density of the nonvolatile component may be measured values or values calculated from raw materials used.

The volume of the pigment can be calculated from the mass and true density of the pigment used. The mass and true density of the pigment may be measured values or values calculated from raw materials used. For example, they can be calculated by separating the pigment and other components from the nonvolatile component of the present composition and measuring the mass and true density of the pigment separated.

### [Anti-sagging agent (anti-settling agent)]

As the anti-sagging agent (anti-settling agent), a conventionally known one such as an organic clay-based wax such as a stearate salt, a lecithin salt or an alkyl sulfonate salt of Al, Ca, or Zn, a polyethylene wax, an amide wax, a hydrogenated castor oil wax, a mixture of a hydrogenated castor oil wax and an amide wax, synthetic fine powder silica, or an oxidized polyethylene-based wax can be used, and among these, an amide wax, synthetic fine powder silica, an oxidized polyethylene-based wax, and an organic clay-based wax are preferable.

As the anti-sagging agent (anti-settling agent), one type may be used or two or more types may be used.

Examples of such an anti-sagging agent (anti-settling agent) include "Disparlon 305", "Disparlon 4200-20", and "Disparlon 6650" manufactured by Kusumoto Chemicals, Ltd.; "A-S-A T-250F" manufactured by ITOH OIL CHEMICALS CO., LTD.; "Flownon RCM-300" manufactured by KYOEISHA CHEMICAL Co., LTD.; and "BENTONE SD-2" manufactured by Elementis Specialties, Inc.

When the present composition contains an anti-sagging agent (anti-settling agent), the content of the anti-sagging agent (anti-settling agent) is preferably 0.5 to 4 mass% with respect to 100 mass% of the nonvolatile component of the present composition.

### [Plasticizer]

Examples of the plasticizer include a petroleum resin, a xylene resin, a terpene phenol resin, and an acrylic resin. When the present composition contains a plasticizer, for example, the anticorrosion property, flexibility, and topcoat coating application compatibility of the resulting anticorrosive coating film can be improved.

As the plasticizer, one type may be used or two or more types may be used.

The petroleum resin is preferably a polymer containing a hydroxy group containing a fraction by-produced in petroleum refining as a main raw material, and is preferably a hydroxy group-containing petroleum resin having a softening point of 150°C or lower, preferably 100°C or lower. When the softening point of the petroleum resin is higher than 150°C, the viscosity of the composition to be obtained may be increased, and the workability may be deteriorated or the physical properties of the resulting coating film may be deteriorated.

Specific examples of such a petroleum resin include "Necires EPX-L" (indene-styrene-based, manufactured by Nevcin Polymers Co.) and "HILENOL PL-1000S" (C9 fraction petroleum resin, manufactured by Kolon Industries, Inc.).

The xylene resin is preferably a resin synthesized by a known method using m-xylene and formaldehyde. In addition, as the xylene resin, a xylene resin modified with a phenol (example: phenol, a bifunctional phenol such as para-t-butylphenol).

Specific examples of such a xylene resin include "NIKANOL Y-51" and "NIKANOL Y-100" (each a xylene formaldehyde resin, manufactured by Fudow Co., Ltd.).

When the present composition contains a plasticizer, the content of the plasticizer is preferably 0.5 to 5 mass% with respect to 100 mass% of the nonvolatile component of the present composition.

### <Method for producing present composition>

The present composition is preferably produced by mixing, at the time of use, a base component and a curing agent component, which are each individually prepared in advance.

The base component can be prepared by blending, stirring, and mixing the respective components constituting the base component. At this time, for example, it is preferable to disperse the blended components as uniformly as possible using, for example, an SG mill or a high-speed disperser while maintaining the temperature of the mill base at 55 to 60°C for about 30 minutes.

On the other hand, depending on the components to be blended, the respective components constituting the curing agent component may be uniformly mixed with, for example, a stirrer.

### <Use of present composition>

According to the present composition, it is possible to form an anticorrosive coating film (layer) with various properties such as oil resistance, solvent resistance, chemical resistance, and an anticorrosion property. Examples of the anticorrosion also include crevice corrosion, galvanic corrosion, and stress corrosion.

Since the present composition enables the formation of an anticorrosive coating film having these excellent properties, the present composition is preferably used for an inner surface of a cargo tank (example: a product carrier or a chemical tanker) for transporting a chemical substance by, for example, land transportation or sea transportation, or a land tank for storing a chemical product in the same manner, and is preferably used for an inner surface of a tank such as WBT, COT, a fresh water tank (FWT), a drinking water tank (DWT), or inner and outer surfaces of, for example, a ship, and is further suitable for use, in addition to these uses, for example, at a place where maintenance is difficult of, for example, a seawater desalination apparatus or a marine structure, around a dam or a water gate, in a pipe of, for example, a plant in which seawater, river water, or industrial water is used as cooling water, a water storage container, a water storage tank, or a pool for storing used nuclear fuel.

In particular, the present composition is preferably used as a universal primer, for example, for inner surface of, for example, tanks (example: a product carrier, a chemical tanker) used for transporting or storing, for example, a chemical substance, WBT, COT, or a pipeline or for a ship.

In addition, the present composition can also be used for repair-coating application to a surface of a substrate with an anticorrosive coating film, in which corrosion has occurred.

In addition, the present composition can stably prevent local corrosion for a long period of time by applying the present composition to a welded portion or a place with a gap of a substrate of, for example, stainless steel to prevent local corrosion of the substrate, and further allowing the present composition to act as an adhesive for bonding a stainless steel plate to the surface of the coating film.

As described above, repairing a substrate can be performed by, for example, a method in which the present composition is applied to a surface of a substrate having a welded portion (welding line) or a gap, and another substrate is bonded to an uncured coating film surface, and the present composition may be further applied onto the another substrate.

### <<Anticorrosive coating film and method for producing anticorrosive coating film>>

An anticorrosive coating film according to an embodiment of the present invention (hereinafter also referred to as "present coating film") is formed using the present composition, and specifically, can be formed by drying (curing) the present composition, and is usually formed on a substrate and used as a substrate with an anticorrosive coating film.

A material of the substrate is not particularly limited, and examples thereof include steel (example: iron, steel, alloy iron, carbon steel, mild steel, alloy steel), non-ferrous metal (example: zinc, aluminum), and stainless steel, and the surface of the substrate may be coated with, for example, a shop primer.

In addition, for example, when mild steel (such as SS400) is used as the substrate, it is desirable to perform surface preparation (example: preparation so that the arithmetic mean roughness (Ra) is about 30 to 75 µm) by, for example, grinding the surface through, for example, grit blasting as necessary.

The dry film thickness of the present coating film is not particularly limited, but is usually 50 µm or more and preferably 200 µm or more, and usually 500 µm or less and preferably 400 µm or less from the viewpoint of, for example, obtaining an anticorrosive coating film having, for example, a sufficient anticorrosion property.

As a method for forming the present coating film, a desired film thickness may be formed by coating application once (one-time coating application), or an anticorrosive coating film having a desired film thickness may be formed by coating application twice or more (two or more-time coating application). From the viewpoint of film thickness control and in consideration of the residual organic solvent in an anticorrosive coating film, it is preferable to form an anticorrosive coating film so as to have a desired dry film thickness by coating application twice or more.

A method for producing an anticorrosive coating film according to an embodiment of the present invention includes a step of drying the present composition to form an anticorrosive coating film. Specifically, the method includes the following steps [1] and [2]. It can also be said that the method for producing an anticorrosive coating film including the following steps [1] and [2] is a method for producing a substrate with an anticorrosive coating film.

Step [1]: a step of applying the present composition to a substrate

Step [2]: a step of drying the applied present composition to form an anticorrosive coating film

### <Step [1]>

The coating application method in the step [1] is not particularly limited, and for example, the coating application may be performed on the surface of the substrate according to a conventional method such as airless spray coating application, air spray coating application, brush coating application, or roll coating application, but in the case of coating application on a large structure such as a tank, spray coating is preferable from the viewpoint that, for example, a large area substrate can be easily applied.

Note that in the coating application operation, the present composition may be diluted, if appropriate, with, for example, a thinner (organic solvent) and then used. However, even when diluted in this way, the VOC content in the composition after dilution is preferably 200 g/L or less.

The conditions of the spray coating application may be appropriately adjusted according to the dry film thickness to be formed, and for example, in the case of airless spray coating application, primary (air) pressure: about 0.4 to 0.8 MPa, secondary (coating material) pressure: about 15 to 36 MPa, and gun moving speed: about 50 to 120 cm/sec are preferable.

Further, the coating application may be performed so that the dry film thickness of the resulting anticorrosive coating film falls within the above-mentioned range.

The viscosity of the present composition suitable for spray coating application is preferably 1,500 to 7,000 mPa·s and more preferably 1,500 to 4,000 mPa·s under measurement conditions at 23°C using an E-type viscometer (FMD type; manufactured by TOKIMEC INC.).

### <Step [2]>

The drying conditions in the step [2] are not particularly limited, and may be set, if appropriate, according to, for example, the method for forming an anticorrosive coating film, the type of substrate, the usage, or the coating application environment, and examples thereof include conditions of 0 to 35°C for 12 to 250 hours. Curing may be performed by forced drying through heating or blowing as desired, but drying and curing are usually performed under natural conditions.

The present composition has excellent low-temperature film formability, and therefore can be dried at a temperature of 10°C or lower, further lower than 10°C, particularly 5°C or lower, and it is preferable to dry the present composition at these temperatures from the viewpoint that, for example, the effect of the present invention is further exhibited as compared with the conventional composition.

The present composition can be dried even at such a temperature, and therefore is suitably used when a substrate that cannot be heated or is not easily heated is applied, and even when such a substrate is applied at a low temperature such as winter, a desired anticorrosive coating film can be formed.

Note that when an anticorrosive coating film is formed by the coating application twice or more, in particular, coating application twice, the steps [1] and [2] are performed, and then a series of the steps [1] and [2] is repeated on the resulting coating film to form the anticorrosive coating film. When an anticorrosive coating film is formed by coating application three times, the anticorrosive coating film is formed by further repeating a series of the steps [1] and [2] on the coating film obtained by coating application twice.

### Examples

Hereinafter, preferred embodiments of the present invention will be described more specifically with reference to examples, but the present invention is not limited to these examples.

### [Examples 1 to 20 and Comparative Examples 1 to 6]

In a container, each material described in the column of base component in Table 1 or 2 was blended with the numerical value (parts by mass) described in each column, and the mixture was stirred at room temperature (23°C) until uniformity is achieved using a high speed disperser, and then dispersed at 56 to 60°C for about 30 minutes. Thereafter, the mixture was cooled to 30°C or lower to prepare a base component of an anticorrosive coating composition.

Further, in a container, each material described in the column of curing agent component in Table 1 or 2 was blended with the numerical value (parts by mass) described in each column, and these components were mixed at ambient temperature and normal pressure using a high speed disperser to prepare a curing agent component.

The base component and the curing agent component were mixed before coating application to prepare an anticorrosive coating composition.

Note that Table 3 shows the description of each component described in Tables 1 and 2.

### <Nonvolatile component>

In a flat bottom dish, 1 g of the prepared anticorrosive coating composition (composition immediately after mixing the base component and the curing agent component) was weighed, and uniformly spread using a wire with a known mass (x g), left at 23°C for 24 hours, and then dried at 110°C for 1 hour. Thereafter, the mass (y g) of the heating residue and the wire were measured.

The nonvolatile content (mass%) of the anticorrosive coating composition was calculated from the following formula. Nonvolatile content of anticorrosive coating composition = (y - x) ×100

### <Low-temperature film formability>

An SS400 sandblasted steel plate (arithmetic mean roughness (Ra): 30 to 75 µm) with a dimension of 150 mm × 70 mm × 2.3 mm (thickness) was prepared. Each anticorrosive coating composition prepared as described above was applied onto a surface of the steel plate using an airless spray, so that the dry film thickness was 300 µm. Thereafter, the state of the anticorrosive coating film after drying at 5°C and 50% RH for 1 day was evaluated according to the following criteria. When the evaluation of the low-temperature film formability is 2 or more, it can be said that there is no problem in practical use.

### (Evaluation criteria)

5: No wrinkles occurred at all in the anticorrosive coating film.
4: The area where wrinkles occurred is less than 1% of the entire surface of the anticorrosive coating film.
3: The area where wrinkles occurred is 1% or more and less than 5% of the entire surface of the anticorrosive coating film.
2: The area where wrinkles occurred is 5% or more and less than 10% of the entire surface of the anticorrosive coating film.
1: The area where wrinkles occurred is 10% or more of the entire surface of the anticorrosive coating film.

### [Preparation of test plate]

Each coating composition was applied in the same manner as in the low-temperature film formability, and then dried at 23°C and 50% RH for 10 days to prepare a steel plate with an anticorrosive coating film (test plate). Each of the prepared test plates was subjected to each test described below. The results are shown in Tables 1 and 2.

### <Anticorrosion property>

The anticorrosion property of each obtained anticorrosive coating film was tested in accordance with JIS K 5600-6-1:2016 (test method for liquid resistance).

A notch 2 reaching the steel plate was made from the anticorrosive coating film side at the position shown in Fig. 1 of each test plate. The test plate 1 with the notch 2 was immersed in 3% salt water at 40°C for 90 days with the notch 2 side facing down (in the direction shown in Fig. 1). After immersion, eleven cuts 3 were made upward in sequence from the left end of the cut 2 so as to divide the notch 2 equally at 5 mm intervals, and the peeling length (length from the notch 2) between the steel plate and the anticorrosive coating film was measured at 10 measurement portions 4 between the cuts 3. The measured peeling lengths at the 10 points were averaged and then evaluated according to the following criteria. When the evaluation of the anticorrosion property is 2 or more, it can be said that there is no problem in practical use.

### (Evaluation criteria)

4: The peeling length is less than 5 mm.
3: The peeling length is 5 mm or more and less than 10 mm.
2: The peeling length is 10 mm or more and less than 15 mm.
1: The peeling length is 15 mm or more.

### <Oil resistance>

The oil resistance of each obtained anticorrosive coating film was tested in accordance with JIS K 5600-6-1:2016 (test method for liquid resistance).

Each of the prepared test plates was immersed in naphtha at ambient temperature for 180 days. The test plates after immersion were evaluated according to the following criteria. Note that the pencil hardness was measured according to JIS K 5600-5-4:1999. When the evaluation of the oil resistance is 3 or more, it can be said that there is no problem in practical use.

### (Evaluation criteria)

6: No rust occurred on the steel plate, no blistering occurred on the coating film, and the pencil hardness of the coating film was H or more (H, 2H, 3H,...).
5: No rust occurred on the steel plate, no blistering occurred on the coating film, and the pencil hardness of the coating film was HB to F.
4: No rust occurred on the steel plate, no blistering occurred on the coating film, and the pencil hardness of the coating film was B to 4B.
3: No rust occurred on the steel plate, no blistering occurred on the coating film, and the pencil hardness of the coating film was 5B or less (5B, 6B, 7B,...).
2: Slight rust occurred on the steel plate, and blistering occurred on the coating film.
1: Rust occurred on the steel plate, and blistering occurred on the coating film.

### [Table 1]

**Table 1**

| | | Example | | | | | | | | | |
|---|---|---|---|---|---|---|---|---|---|---|---|
| | | 1 | 2 | 3 | 4 | 5 | 6 | 7 | 8 | 9 | 10 |
| Base component | Epoxy resin A1 | 23 | 23 | 23 | 23 | 23 | 23 | 23 | 23 | 23 | 23 |
| | Epoxy resin A2 | | | | | | | | | | |
| | Epoxy resin A3 | | | | | | | | | | |
| | Reactive diluent | 5 | 5 | 5 | 5 | 5 | 5 | 5 | 5 | 5 | 5 |
| | Potash feldspar | 20 | 20 | 20 | 20 | 20 | 20 | 20 | 20 | 20 | 20 |
| | Talc | 12.9 | 12.9 | 12.9 | 12.9 | 12.9 | 12.9 | 12.9 | 12.9 | 12.9 | 12.9 |
| | Mica | 6 | 6 | 6 | 6 | 6 | 6 | 6 | 6 | 6 | 6 |
| | Barium sulfate | 12 | 12 | 12 | 12 | 12 | 12 | 12 | 12 | 12 | 12 |
| | Titanium white | 10 | 10 | 10 | 10 | 10 | 10 | 10 | 10 | 10 | 10 |
| | Carbon black | 0.1 | 0.1 | 0.1 | 0.1 | 0.1 | 0.1 | 0.1 | 0.1 | 0.1 | 0.1 |
| | Silane coupling agent | 10 | 10 | 10 | 10 | 10 | 10 | 10 | 10 | 10 | 10 |
| | High boiling point organic solvent | | | | 5 | 10 | | | | | |
| | Anti-sagging agent | 1 | 1 | 1 | 1 | 1 | 1 | 1 | 1 | 1 | 1 |
| | (Subtotal) | 100 | 100 | 100 | 105 | 110 | 100 | 100 | 100 | 100 | 100 |
| Curing agent component | Amine-based curing agent B1 | 12.5 | 12.5 | 12.5 | 12.5 | 12.5 | 12.5 | 12.5 | | | |
| | Amine-based curing agent B2 | | | | | | | | 5 | 3 | 3 |
| | Amine-based curing agent B3 | | | | | | | | | | 2 |
| | Amine-based curing agent B4 | | | | | | 1 | | | | |
| | Amine-based curing agent B5 | 2 | 2 | 2 | 2 | 2 | 1 | 1 | 3 | 3 | 3 |
| | Amine-based curing agent B6 | | | | | | | 2 | 6.5 | 6.5 | 6.5 |
| | Amine-based curing agent B7 | | | | | | | | | 2 | |
| | Amine-based curing agent B8 | | | | | | | | | | |
| | Amine-based curing agent B9 | | | | | | | | | | |
| | Amine-based curing agent B10 | | | | | | | | | | |
| | Amine-based curing agent B11 | | | | | | | | | | |
| | Alkylamine C1 | 0.1 | 0.2 | 0.5 | 0.5 | 0.5 | 0.5 | 0.5 | 0.5 | 0.5 | 0.5 |
| | Alkylamine C2 | | | | | | | | | | |
| | (Subtotal) | 14.6 | 14.7 | 15 | 15 | 15 | 15 | 16 | 15 | 15 | 15 |
| (Total) | | 114.6 | 114.7 | 115 | 120 | 125 | 115 | 116 | 115 | 115 | 115 |
| Nonvolatile content (mass%) | | 98 | 98 | 98 | 95 | 93 | 98 | 97 | 96 | 96 | 96 |
| VOC (g/L) | | 45 | 44 | 44 | 80 | 120 | 46 | 49 | 72 | 69 | 68 |
| Low-temperature film formability (5°C) | | 2 | 3 | 4 | 4 | 4 | 4 | 4 | 4 | 4 | 4 |
| Anticorrosion property | | 4 | 4 | 4 | 3 | 2 | 4 | 4 | 4 | 4 | 4 |
| Oil resistance | | 6 | 6 | 6 | 4 | 3 | 6 | 6 | 6 | 6 | 6 |

**Table 1 (continued)**

| | | Example | | | | | | | | | |
|---|---|---|---|---|---|---|---|---|---|---|---|
| | | 11 | 12 | 13 | 14 | 15 | 16 | 17 | 18 | 19 | 20 |
| Base component | Epoxy resin A1 | 23 | 23 | 23 | 23 | 23 | 23 | | | | 23 |
| | Epoxy resin A2 | | | | | | | 25.5 | | | |
| | Epoxy resin A3 | | | | | | | | 24 | 47 | |
| | Reactive diluent | 5 | 5 | 5 | 5 | 5 | 5 | 5 | 5 | 5 | 5 |
| | Potash feldspar | 20 | 20 | 20 | 20 | 20 | 20 | 20 | 20 | 20 | 20 |
| | Talc | 12.9 | 12.9 | 12.9 | 12.9 | 12.9 | 12.9 | 12.9 | 12.9 | 12.9 | 12.9 |
| | Mica | 6 | 6 | 6 | 6 | 6 | 6 | 6 | 6 | 6 | 6 |
| | Barium sulfate | 12 | 12 | 12 | 12 | 12 | 12 | 12 | 12 | 12 | 12 |
| | Titanium white | 10 | 10 | 10 | 10 | 10 | 10 | 10 | 10 | 10 | 10 |
| | Carbon black | 0.1 | 0.1 | 0.1 | 0.1 | 0.1 | 0.1 | 0.1 | 0.1 | 0.1 | 0.1 |
| | Silane coupling agent | 10 | 10 | 10 | 10 | 10 | 10 | 10 | 10 | 10 | 10 |
| | High boiling point organic solvent | | | | | | | | | | |
| | Anti-sagging agent | 1 | 1 | 1 | 1 | 1 | 1 | 1 | 1 | 1 | 1 |
| | (Subtotal) | 100 | 100 | 100 | 100 | 100 | 100 | 102.5 | 101 | 124 | 100 |
| Curing agent component | Amine-based curing agent B1 | | 12.5 | 12.5 | 12.5 | 12.5 | 12.5 | 12.5 | 9 | 9 | 12.5 |
| | Amine-based curing agent B2 | 6 | | | | | | | | | |
| | Amine-based curing agent B3 | 3 | | | | | | | | | |
| | Amine-based curing agent B4 | | | | | | | | | | |
| | Amine-based curing agent B5 | | 2 | 2 | 2 | 2 | 2 | 2 | 4 | 4 | |
| | Amine-based curing agent B6 | | | | | | | | | | |
| | Amine-based curing agent B7 | | | | | | | | | | 2.8 |
| | Amine-based curing agent B8 | 7 | | | | | | | | | |
| | Amine-based curing agent B9 | | | | | | | | | | |
| | Amine-based curing agent B10 | | | | | | | | | | |
| | Amine-based curing agent B11 | | | | | | | | | | |
| | Alkylamine C1 | 0.5 | 1 | 2 | 3 | 5 | | 0.5 | 0.5 | 0.5 | 0.5 |
| | Alkylamine C2 | | | | | | 0.5 | | | | |
| | (Subtotal) | 16.5 | 15.5 | 16.5 | 17.5 | 19.5 | 15 | 15 | 13.5 | 13.5 | 15.8 |
| (Total) | | 116.5 | 115.5 | 116.5 | 117.5 | 119.5 | 115 | 117.5 | 114.5 | 137.5 | 115.8 |
| Nonvolatile content (mass%) | | 97 | 98 | 98 | 98 | 98 | 98 | 98 | 98 | 98 | 98 |
| VOC (g/L) | | 48 | 44 | 44 | 47 | 46 | 45 | 45 | 43 | 48 | 47 |
| Low-temperature film formability (5°C) | | 4 | 4 | 4 | 4 | 4 | 3 | 4 | 4 | 4 | 4 |
| Anticorrosion property | | 4 | 4 | 4 | 4 | 3 | 4 | 4 | 4 | 4 | 4 |
| Oil resistance | | 3 | 6 | 5 | 4 | 3 | 6 | 6 | 6 | 6 | 4 |

**[Table 2]**

| | | Comparative Example | | | | | |
|---|---|---|---|---|---|---|---|
| | | 1 | 2 | 3 | 4 | 5 | 6 |
| Base component | Epoxy resin A1 | 23 | 23 | 23 | 23 | 23 | 23 |
| | Epoxy resin A2 | | | | | | |
| | Epoxy resin A3 | | | | | | |
| | Reactive diluent | 5 | 5 | 5 | 5 | 5 | 5 |
| | Potash feldspar | 20 | 20 | 20 | 20 | 20 | 20 |
| | Talc | 12.9 | 12.9 | 12.9 | 12.9 | 12.9 | 12.9 |
| | Mica | 6 | 6 | 6 | 6 | 6 | 6 |
| | Barium sulfate | 12 | 12 | 12 | 12 | 12 | 12 |
| | Titanium white | 10 | 10 | 10 | 10 | 10 | 10 |
| | Carbon black | 0.1 | 0.1 | 0.1 | 0.1 | 0.1 | 0.1 |
| | Silane coupling agent | 10 | 10 | 10 | 10 | 10 | 10 |
| | High boiling point organic solvent | | | | | | |
| | Anti-sagging agent | 1 | 1 | 1 | 1 | 1 | 1 |
| | (Subtotal) | 100 | 100 | 100 | 100 | 100 | 100 |
| Curing agent component | Amine-based curing agent B1 | 12.5 | 12.5 | 12.5 | 12.5 | 125 | 12.5 |
| | Amine-based curing agent B2 | | | | | | |
| | Amine-based curing agent B3 | | | | | | |
| | Amine-based curing agent B4 | | 2 | | | | |
| | Amine-based curing agent B5 | | | 2 | 2 | 2 | 2 |
| | Amine-based curing agent B6 | | | | | | |
| | Amine-based curing agent B7 | | | | | | |
| | Amine-based curing agent B8 | | | | | | |
| | Amine-based curing agent B9 | | | | 0.5 | | |
| | Amine-based curing agent B10 | | | | | 0.5 | |
| | Amine-based curing agent B11 | | | | | | 0.5 |
| | Alkylamine C1 | | | | | | |
| | Alkylamine C2 | | | | | | |
| | (Subtotal) | 12.5 | 14.5 | 14.5 | 15 | 15 | 15 |
| (Total) | | 112.5 | 114.5 | 114.5 | 115 | 115 | 115 |
| Nonvolatile content (mass%) | | 98 | 98 | 98 | 98 | 98 | 98 |
| VOC (g/L) | | 43 | 45 | 46 | 47 | 44 | 43 |
| Low-temperature film formability (5°C) | | 4 | 1 | 1 | 1 | 1 | 1 |
| Anticorrosion property | | 4 | 4 | 4 | 4 | 4 | 4 |
| Oil resistance | | 2 | 6 | 6 | 6 | 6 | 6 |

**[Table 3]**

| | |
|---|---|
| Epoxy resin A1 | Bisphenol F-type epoxy resin (liquid), Adeka Resin EP-4901 (manufactured by ADEKA) |
| Epoxy resin A2 | Bisphenol A-type epoxy resin (liquid), E-028 (manufactured by OHTAKE-MEISHIN CHEMICAL, CO., LTD.) |
| Epoxy resin A3 | Novolac-type epoxy resin (liquid), D.E.N. 431 Epoxy Novolac Resin (manufactured by The Dow Chemical Company) |
| Reactive diluent | Neopentyl glycol diglycidyl ether, DENACOL EX-211 (manufactured by Nagase ChemteX Corporation) |
| Potash feldspar | Potash feldspar, Unispar PG-K10 (manufactured by Sibelco Malaysia Sdn Bhd) |
| Talc | Talc, FC-2 Talc (manufactured by Fukuoka Talc Co., LTD.) |
| Mica | Mica powder 100 Mesh (manufactured by Fukuoka Talc Co., LTD.) |
| Barium sulfate | Barium sulfate, Barico 300W (manufactured by HAKUSUI TECH.) |
| Titanium white | Titanium white, TIPAQUE R-930 (manufactured by ISHIHARA SANGYO KAISHA, LTD.) |
| Carbon black | Mitsubishi Carbon Black MA100 (manufactured by Mitsubishi Chemical Corporation) |
| Silane coupling agent | 3-glycidoxypropyltrimethoxysilane, KBM 403 (manufactured by Shin-Etsu Chemical Co., Ltd.) |
| High boiling point organic solvent | Benzyl alcohol (manufactured by FUJIFILM Wako Pure Chemical Corporation) |
| Anti-sagging agent | Amide-based anti-settling agent, Disparlon 6650 (manufactured by Kusumoto Chemicals, Ltd.) |
| Amine-based curing agent B1 | Aliphatic amine (benzyl alcohol: 0%, liquid), Ancamine 2738 (manufactured by Evonik Japan Co., Ltd.) |
| Amine-based curing agent B2 | Aliphatic amine (benzyl alcohol: 0%, liquid), Ancamide 506 (manufactured by Evonik Japan Co., Ltd.) |
| Amine-based curing agent B3 | Aliphatic amine (benzyl alcohol: 0%, liquid, phenalkamine), NX-5567 (manufactured by Cardolite Japan) |
| Amine-based curing agent B4 | Alicyclic amine (benzyl alcohol: 0%, liquid, containing PACM), Ancamine 2167 (manufactured by Evonik Japan Co., Ltd.) |
| Amine-based curing agent B5 | Alicyclic amine (benzyl alcohol: 0%, liquid, containing MPCA), Ancamine 2264 (manufactured by Evonik Japan Co., Ltd.) |
| Amine-based curing agent B6 | Alicyclic amine (benzyl alcohol: 50%, liquid, containing MPCA), Ancamine 2280 (manufactured by Evonik Japan Co., Ltd.) |
| Amine-based curing agent B7 | Alicyclic amine (benzyl alcohol: 0%, liquid, MXDA Mannich modified product), Ancamine 2089K (manufactured by Evonik Japan Co., Ltd.) |
| Amine-based curing agent B8 | Aliphatic amine (benzyl alcohol: 20%, liquid, TETA polyamide), Ancamine 2353 (manufactured by Evonik Japan Co., Ltd.) |
| Amine-based curing agent B9 | Polyoxypropylenediamine (liquid) JEFFAMINE D-2000 (manufactured by HUNTSMAN) |
| Amine-based curing agent B10 | Aliphatic amine (liquid), NBDA (manufactured by MITSUI FINE CHEMICALS, INC.) |
| Amine-based curing agent B11 | Aliphatic amine (liquid), DETA (manufactured by MITSUI FINE CHEMICALS, INC.) |
| Alkylamine C1 | Primary alkylamine, FARMIN 08D (manufactured by Kao Corporation) |
| Alkylamine C2 | Primary alkylamine, FARMIN CS (manufactured by Kao Corporation) |

The anticorrosive coating composition obtained in the above examples is a high-solid type anticorrosive coating composition, and has excellent low-temperature film formability while an anticorrosive coating film having excellent oil resistance and anticorrosion property can be formed. It is considered that the anticorrosive coating film obtained from the anticorrosive coating composition of the above examples also has excellent solvent resistance and chemical resistance.

### Reference Signs List

- 1: Test plate
- 2: Notch
- 3: Cut
- 4: Measurement portion

## Claims

1. An anticorrosive coating composition, comprising:
an epoxy compound (A);
an amine curing agent (B); and
an alkylamine (C).

2. The anticorrosive coating composition according to claim 1, wherein the alkylamine (C) is liquid at ambient temperature.

3. The anticorrosive coating composition according to claim 1, wherein the alkylamine (C) is a primary amine represented by R-NH₂ [R is an alkyl group having 1 to 20 carbon atoms].

4. The anticorrosive coating composition according to claim 1, wherein the amine curing agent (B) comprises an amine curing agent having a cyclic structure.

5. The anticorrosive coating composition according to claim 1, wherein the epoxy compound (A) has an epoxy equivalent of 200 or less and is liquid at ambient temperature.

6. The anticorrosive coating composition according to claim 1, wherein the amine curing agent (B) is liquid at ambient temperature.

7. The anticorrosive coating composition according to claim 1, wherein a nonvolatile component content is 90 mass% or more.

8. An anticorrosive coating film formed from the anticorrosive coating composition according to any one of claims 1 to 7.

9. A method for producing an anticorrosive coating film, comprising a step of drying the anticorrosive coating composition according to any one of claims 1 to 7 at a temperature of 10°C or lower to form an anticorrosive coating film.
